# EUROPEAN PATENT SPECIFICATION

(11) **EP 2 471 356 B1**
(45) Date of publication and mention of the grant of the patent: **05.06.2013**
(21) Application number: 11195802.1
(22) Date of filing: 27.12.2011
(51) Int. Cl.: A01K 1/00, A01G 9/22, E06B 9/66, E06B 9/70

(54) **Shielding system and method for winding/unwinding a shielding material**
Abschirmsystem und Verfahren zum Auf- und Abwickeln eines abschirmenden Materials
Système de protection et procédé d'enroulement/déroulement d'un matériau de protection

(30) Priority: 29.12.2010 NL 2005934
(43) Date of publication of application: 04.07.2012
(73) Proprietor: De Gier B.V., 2291 PG Wateringen (NL)
(72) Inventor: Benne, Stephan, 2291 PG Wateringen (NL); Sandberg, Robert, 2291 PG Wateringen (NL)
(74) Representative: Vermeulen, Martijn

(56) References cited:
- WO-A1-2005/010313

## Description

The present invention relates to a shielding system according to the preamble of claim 1.

Such shielding system may be arranged in a building opening, for instance in the wall of a stable, greenhouse or other building to screen the building opening. By providing a shielding material to cover partly or completely the building opening, the climate within the building may be controlled. For instance the building opening may be partly opened to ventilate the inside of a building. Also the shielding material may be used to dim or filter light falling into the building.

In some applications, it may be desirable that the shielding installation opens the building opening from the top side so that the fresh air has a considerable warp into the building and that the relative warm air can relatively easily be vented through the building opening, while relatively cold air remains within the building. The position of the air flow will be less bothering for people and animals

In such embodiment a lower edge or the middle of the shielding material is connected to a roller for winding up and down the shielding material, while the top edge of the shielding material is held by a support system. Usually the top edge of the shielding material is held by flexible means which are wound up or down on a reel connected to a motor. During winding and unwinding of the shielding material, the diameter of the roller including the shielding material will change due to the thickness of the shielding material. Also the diameter of the flexible means rolled on the reel may change.

Further, when shielding material is wound on the roller, it is released from the reel and vice versa. Thus, when no extra measures are taken, the shielding material may be subject to very high tensions, or may be sagging due to this changing difference in diameters during winding and unwinding of the shielding material.

EP 0982466 discloses a shielding system for shielding a building opening, wherein the upper edge of the shielding material can be lowered to open the building opening from the top side. The roller and the upper edge support system are both driven by a single motor. In the configuration of this known shielding system the possible effect of changing diameters during winding and unwinding of the shielding material is acknowledged. As a solution for this problem it is proposed to provide a flexible connection between the roller and the motor so that the roller can compensate for the diameter differences by adjustment of the height of the roller.

WO 2005/010313 discloses another embodiment of a shielding system wherein the upper edge of the shielding material may be lowered to open a building opening from the top side down. In this embodiment a first motor is provided to drive the roller on which the shielding material is wound and a second motor is used to drive a shaft on which a number of reels are provided to wind up elongate flexible means connected to the upper edge of the shielding material.

The first motor is vertically movably mounted to move together with the roller to compensate for difference in diameter of the roller including the shielding material wound on the roller.

A drawback of both prior art shielding systems that the roller is not fixedly attached at the bottom end of the building opening in order to compensate for the effect of difference in diameter as a result of shielding material being wound up and down the roller. Due to this drawback extra movable parts have to be provided which may decrease the reliability of the shielding system. Furthermore, since the vertical position of the roller may change, wind may more easily pass under the roller which is generally undesirable.

It is desirable to provide a shielding system lacking this drawback, or at least to provide an alternative therefor.

The invention provides a shielding system, comprising:
a flexible shielding material
a roller for winding up and down the shielding material,
a first motor to rotationally drive the roller,
an upper edge support system for supporting an upper edge of the shielding material comprising flexible means connected between the upper edge of the shielding material and one or more pulling elements of the support system, and
a second motor to drive the one or more pulling elements,
**characterized in that** at least one of the first motor and second motor can be driven with different speeds, and in that the shielding system comprises
a sensor to measure a process parameter during winding/unwinding of the shielding material, and
a control system to control a ratio between speeds of the first and the second motor in dependence of the process parameter.

The support system comprises one or more elongate flexible means such as lines, cables, straps or bands connected to the upper edge of the shielding material, and one or more pulling elements such as one or more winding elements, for instance reels with which the elongate flexible means can be pulled up and down.

By controlling the ratio between the speeds of the first and second motor in dependence of a process parameter, the changing diameter of the roller with shielding material as a result of winding/unwinding the shielding material on the roller can be taken into account.

It is remarked that controlling the ratio between the speeds of the first and second motor may comprise direct and indirect control of the ratio between motor speeds. The control system may for instance be configured to adjust the ratio between the speeds of the first and second motor by adjusting the speed of only one of the motors, while the speed of the other motor remains constant. Adjusting the speed of one of the motors may be carried out by using any input signal of the motor capable of changing this speed.

The ratio between the speeds is controlled on the basis of at least one process parameter. This process parameter may for instance be a rotational position of the roller or the height of the roller. When the rotational position or height of the roller is known, the actual diameter of the roller including the shielding material may also be estimated. This actual diameter may be calculated or determined, before use, for every rotational position of the roller, or may be calculated, during use, on the basis of a number of reference rotational positions and corresponding diameters of the roller including the shielding material. On the basis of this actual diameter and the characteristics of the upper edge support system, a ratio between the speeds of the first and second motor, for instance the ratio between rotational speeds of a first and a second electric motor may be determined to maintain a proper tension in the shielding material.

When the diameter of winding elements of the upper edge support system significantly changes due to winding the flexible means on the winding elements, this changing diameter should also be taken into account. In such embodiment, the rotational position of the winding elements may also be a process parameter in dependence of which the ratio of the speeds of the first and second motors is controlled.

A sensor, for instance an encoder can be used to determine the rotational position of the roller and/or the one or more winding elements. The sensor may be connected to or be a part of the respective motor driving the roller and/or the one or more winding elements, or the sensor may directly be connected to the roller and/or the one or more winding elements, respectively.

In another embodiment the height of the roller can be used as a process parameter. This height is also representative for the actual diameter of the roller including the shielding material wound on the roller. Any other process parameter representative for the diameter of the roller including the shielding material wound on the roller may also be used.

In an alternative embodiment, the process parameter is a tension in the shielding material. By providing a sensor which is capable of measuring the tension in the shielding material, and using this tension to control the ratio between speeds of the first motor and the second motor, the tension in the shielding material can be maintained at substantially the same level. By maintaining the tension at substantially the same level sagging of the shielding material or a very high tension in the shielding material may be avoided.

In an embodiment, the roller and the first motor are fixed in a stationary position at a bottom end of a building opening, wherein the shielding system is provided. An advantage of controlling the ratio between the speeds of the first and second motor is that both the first motor and the roller can be mounted at a fixed position, preferably at the bottom of the building opening. This may also ensure a reliable closure of the bottom end of the building opening below the roller.

In an embodiment, the control system comprises a memory wherein a relationship between the process parameter and associated speeds of the first and second motor or a ratio there between is stored, and wherein the control system is configured to adapt the ratio between speeds on the basis of the relationship stored in the memory.

The relationship between the process parameter may be a table comprising different values of the process parameter and associated speeds or ratios between the speeds of the first motor and second motor. In another embodiment the relationship may be a functional relationship between the process parameter and the associated speeds or a ratio there between on the basis of which the control signal for the first and/or second motor may be calculated with the actual value of the process parameter.

In an embodiment, the flexible means comprise spring elements. To maintain a certain tension level within the shielding material spring elements may be arranged in the flexible means of the upper edge support system. For instance springs may be provided between the upper edge of the shielding material and the flexible means which run to the winding elements.

In an embodiment, the roller is horizontally arranged in the middle of the shielding material and the lower edge of the shielding material is fixedly connected. As an alternative to an embodiment, wherein the roller is provided at a fixed location at the bottom end of a building opening, the horizontally extending roller may be connected to the middle of the shielding material. When it is desired that the building opening is opened from the top side, the roller will move, in such embodiment, together with shielding material in a vertical direction during winding and unwinding of the shielding material on the roller.

The first motor may be mounted at a fixed position and be connected to the roller in such a way that the roller may move in the vertical direction, or the first motor may be movably in the vertical direction to move together with the roller in the vertical direction. Although in this embodiment the roller is not mounted at a fixed location, the present invention may provide the advantage of accurate and reliable control of the tension within the shielding material independent of the position of the roller, and the amount of shielding material wound on the roller.

The present invention further relates to a method for winding/unwinding a shielding material in a building opening, comprising:
providing a shielding system comprising:
   a flexible shielding material
   a roller for winding up and down the shielding material,
   a first motor to rotationally drive the roller,
   an upper edge support system for supporting an upper edge of the shielding material comprising flexible means connected between the upper edge of the shielding material and one or more pulling elements of the support system,
   and
   a second motor to drive the one or more pulling elements,
winding the shielding material up or down the roller to, respectively, open or close the building opening,
characterized by at least one of the first motor and second motor being driveable with different speeds,
wherein the method comprises:
measuring with a sensor a process parameter during winding of the shielding material, and
controlling with a control system the ratio between speeds of the first and the second motor in dependence of the process parameter.

An exemplary embodiment of a shielding system according to the invention will now be described, wherein reference is made to the accompanying drawing in which:
Figure 1 shows a first embodiment of a shielding system according to the invention;
Figure 2 shows a side view of a roller safety system that can be applied in the shielding system of the present invention; and
Figure 3 shows a second embodiment of a shielding system according to the invention.

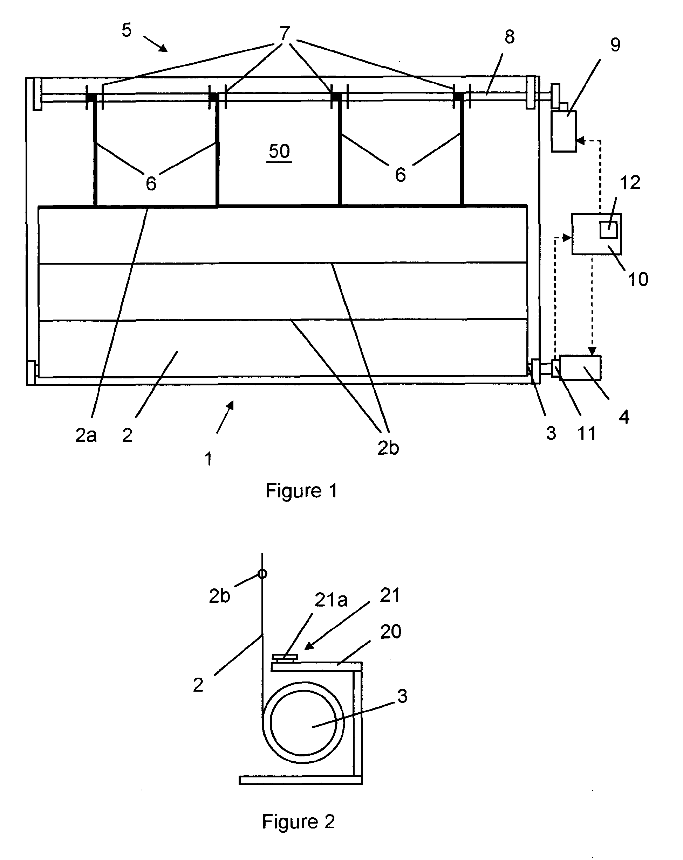

Figure 1 shows a first embodiment of a shielding system according to the invention generally indicated by the reference numeral 1.

The shielding system 1 comprises a flexible shielding material 2, a roller 3 for winding up and down the shielding material 2, a first motor 4 to rotationally drive the roller 3, and an upper edge support system 5.

The shielding system 1 is designed to wind the shielding material 2 up and down the roller 3 to partially or completely cover a building opening 50, or to completely open the building opening 50. The building opening 50 may for instance be provided in a stable or greenhouse wall, or any other building. The shielding system 1 may also be used for any other suitable application.

The roller 3 extends in a substantially horizontal position in the building opening 50. The roller 3 and the first motor 4 are mounted at a fixed location at a bottom end of the building opening 50. The shielding material 2 is for example a rectangular sheet of windproof, windbrake or shading material, for instance made of canvas or cloth. A lower edge of the shielding material 2 is connected to the roller 3, and the shielding material 2 is partly rolled up the roller 3.

The shielding material 2 may comprise a number of reinforcement ribs 2b. These reinforcement ribs 2b, for instance cords, slats or strips of relative stiff material, are arranged in or attached to the shielding material and extend in a horizontal direction. The reinforcement ribs 2b are provided to give the shielding material more resistance against wind forces exerted on the shielding material 2.

The upper edge support system 5 is configured to support an upper edge 2a of the shielding material. The support system comprises elongate flexible means in the form of cables or bands 6 provided between the upper edge 2a of the shielding material 2 and a number of reels 7 acting as winding elements of the support system 5. The reels 7 are arranged on a shaft 8. The shaft 8 and therewith the reels 7 can be rotated by a second motor 9 connected to the shaft 8.

To maintain a certain tension in the shielding material 2 spring elements may be provided in the flexible means, for instance between the cables 6 and the upper edge 2a of the shielding material 2.

The first motor 4 and second motor 9 are electric motors, possibly provided with a gearbox. In alternative embodiments, the first motor 4 and the second motor 9 may be hydraulic or pneumatic motors.

A control system 10 is provided to control actuation of the first motor 4 and the second motor 9 to wind the shielding material up and down the roller, while at the same time the height of the upper edge 2a of the shielding material 2 is decreased and increased, respectively. In this way, the area in the building opening 50 covered by shielding material 2 may be adapted to open the building opening 50 or to partially or completely cover it.

The reels 7 may be provided with a helical groove in which the cables 6 are guided. The helical groove is designed such that the cables 6 wound on the reels 7 are guided in the helical groove. As a result, the diameter of the reels 7 including the cables 6 remains the same for all rotational positions of the reels 7.

However, when shielding material 2 is wound on the roller 3 to increase the opening above the upper edge 2a, the effective diameter of the roller will increase, and when shielding material 2 is wound from the roller 3 to decrease the opening above the upper edge 2a, the effective diameter of the roller will decrease. Without compensation, this changing diameter in dependence of the position of the roller 2 may result in sagging of the shielding material 2 or in a very high tension in the shielding material 2.

To compensate for this changing diameter of the roller 3 including the shielding material 2 for different rotational positions of the roller 2, the control system 10 is configured to control the ratio between the rotational speeds of the first motor 4 and the second motor 9 on the basis of the rotational position of the roller measured by an encoder 11.

In the embodiment shown in Figure 1, the rotational speed of the first motor may be adjusted by the control system 10 in dependence of the rotational position of the roller 3 measured by the encoder 11, while the rotational speed of the second motor 9, when actuated, remains the same for all rotational positions of the reels 7.

In an alternative embodiment, the rotational speed of only the second motor 9 or both motors may be adjustable to control the ratio between the rotational speeds of the motors 4, 9.

The control system 10 comprises a memory 12 wherein a relationship between the process parameter and values of associated rotational speeds of the first motor and the second motor are stored. When the rotational speed of only one of the motors may be changed to adjust the ratio between rotational speeds between the first motor 4 and the second motor 9, also only the relationship between values of the process parameter and the associated input signal of the respective motor 4, 9 may be stored in the memory 12.

The memory 12 may comprise a table wherein different values of the process parameter and associated rotational speeds of the first and/or second motor 4, 9 or ratios between the rotational speeds of the first motor 4 and second motor 9 are stored.

As an alternative, the memory 12 may comprise a functional relationship between the process parameter and associated rotational speeds of the first and/or second motor or ratios there between. The control system 10 may calculate the rotational speed of the respective motor or motors 4, 9 in dependence of the measured process parameter and the functional relationship.

With the control system 10 of the invention sagging of the shielding material 2 or too high tensions in the shielding material 2 may be avoided, while at the same time the roller 3 and the first motor 4 may be arranged at a fixed location in the building opening 50.

When the area above the upper edge 2a of the shielding material 2 should be increase, for instance for increased ventilation, the control system will actuate both the first motor 4 and the second motor 9. As a result, the shielding material 2 will be rolled up the roller 3, and cables 6 will be released from the reels 7. During winding the encoder 11 will determine the rotational position of the roller 3 and adapt, when required, directly or indirectly, the ratio between the rotational speeds of the first motor 4 and the second motor 9. In this way, a proper tension is maintained in the shielding material 2.

In alternative embodiments, the encoder may be provided at any suitable location to determine a rotational position of the roller 3 or the reels 7. In yet alternative embodiments, any other sensor to determine a parameter representative for the diameter of the roller including the shielding material may also be used. For instance, a height sensor may be provided to measure the height of the roller 3. This height may also be used to control the ratio between the rotational speeds of the first motor 4 and the second motor 9.

Figure 2 shows a cross section of a roller 3 and a shielding material 2 partly wound on the roller 3. In this drawing a security system is provided to make sure that during winding the shielding material 2 on the roller no object or person may be trapped between the roller and shielding material 2. The security system comprises a roller housing 20 provided around the roller 3 to decrease the risk that a person or object may be trapped between the shielding material 2 and the roller 3.

To further decrease the risk that a person or object becomes trapped between shielding material and the roller, an emergency stop sensor 21 is provided on the housing 20 next to the shielding material 2. The emergency stop sensor 21 is configured to determine whether an object is or may be trapped between shielding material 2 and the roller 3. The emergency stop sensor 21 comprises a sensor line 21 a extending over substantially the whole length of the roller 3. In the shown embodiment, the sensor line 21 a comprises a contact strip. When a force is exerted on the contact strip, the contact strip 21 a may be pressed down on a contact switch. Activation of this contact switch may be used to stop winding the shielding material 2 up the roller 3. In alternative embodiments, the sensor line 21a may comprise any suitable sensor system to determine that a force is exerted on the sensor line 21a or that an object is present on the sensor line 21a. Embodiments comprising such sensor system for instance include a pulling cord stretched along the sensor line, a pressure sensor line, for example a tube comprising oil or air, or an optical sensor line, for example a laser beam.

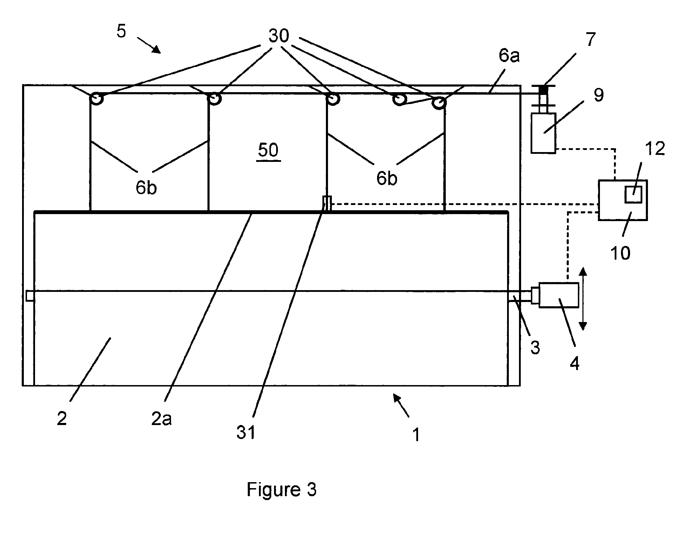

Figure 3 shows an alternative embodiment of a shielding system 1 according to the invention. Same parts or parts having substantially the same function have been given the same reference numerals as the embodiment of Figure 1.

The roller 3 extends in a substantially horizontal position in the building opening 50 and the roller 3 is fixed to approximately the middle of the shielding material 2 , i.e. between the upper edge 2a and the lower edge. The lower edge of the shielding material 2 is fixed to the bottom end of the building opening 50, for instance to a stationary beam fixedly arranged at the bottom side of the building opening 50.

The advantage of locating the roller 3 in the middle of the shielding material 2 is that the winding and unwinding can be performed relatively quick since a single revolution of the roller 3 results in winding the shielding material 2 twice about the circumference of the roller 3. Furthermore, the roller 3 arranged in the middle of the shielding material provides stiffness to the shielding material 2. As a result, any wind force exerted on the shielding material 2 has less effect on the shielding material 2.

The presence of the roller 3 in the middle of the shielding material 2 requires that the roller 3 is moved in vertical direction together with the middle of the shielding material 2 during winding and unwinding of the shielding material 2. In the embodiment of Figure 3 the first motor 4 hangs on a contra weight and moves together with the roller 3 to follow the vertical movements of the roller 3.

In an alternative embodiment, the first motor 4 may be arranged at a fixed location, and a flexible connection may be arranged between the roller 3 and the first motor 4 to compensate for the vertical movements of the roller 3.

The upper edge support system 5 is configured to support the upper edge 2a of the shielding material and comprises elongate flexible means in the form of cables provided between the upper edge 2a of the shielding material 2 and a reel 7 acting as winding element of the support system 5. The reel 7 can be rotated by the second motor 9 connected to the reel 7. The cables comprise a main cable 6a which is wound on and off the reel 7. For each connection to the upper edge 2a of the shielding material 2, support cables 6b are provided between the upper edge 2a and the main cable 6a. Pulleys 30 are provided to guide the support cables 6b.

A force sensor 31 is provided to measure the tension in one of the support cables 6b. This force is representative for the tension in the shielding material 2. Generally, it is desirable that the tension in the shielding material remains at substantially the same level. When the tension in the shielding material becomes too low, the shielding material may sag and the shielding material may damage due to the influence of the wind. On the other hand, when the tension in the shielding material 2 becomes too high, the shielding material or the cables may damage. It is remarked that in alternative embodiments, two or more force sensors 31 may be provided in two or more cables 6b or the associated pulleys 30, in particular when the shielding system extend over a relatively large length. The force sensor 31 may also be provided in the main cable 6a.

The control system 10 is provided to control actuation of the first motor 4 and the second motor 9 to wind the shielding material on and off the roller 3, while at the same time the height of the upper edge 2a of the shielding material 2 is decreased and increased, respectively. In this way, the area in the building opening 50 covered by shielding material 2 may be adapted to open the building opening 50 or to partially or completely cover it.

Similar to the embodiment of Figure 1 the winding and unwinding of the shielding material 2 on the roller 3 has effect on the effective diameter of the roller 3, i.e. the diameter of the roller 3 including the shielding material wound up the roller 3.

To compensate for this changing effective diameter of the roller 3 including the shielding material 2 for different rotational positions of the roller 3, the control system 10 is configured to control the ratio between the rotational speeds of the first motor 4 and the second motor 9 on the basis of the force measured by the force sensor 31.

When the measured force is relative high the rotational speed of the first motor 4 should be decreased with respect to the rotational speed of the second motor, while when the measured force is relative low the rotational speed of the first motor 4 should be increased with respect to the rotational speed of the second motor 9.

In this way the tension in the shielding material 2 can be controlled with high accuracy.

The control system 10 may comprise a functional relationship between the force measured by the force sensor 31 and the associated rotational speeds of the first motor 4 and/or second motor 9, or the ratio between the rotational speeds.

It is remarked that the control system 10 including sensors 11, 31 of Figures 1 and 3 can be arranged in both embodiments with the roller 3 at the lower edge of the shielding material and in the middle of the shielding material.

## Claims

1. Shielding system (1), comprising:
a flexible shielding material (2)
a roller (3) for winding up and down the shielding material,
a first motor (4) to rotationally drive the roller,
an upper edge support system (5) for supporting an upper edge of the shielding material comprising elongate flexible means (6) provided between the upper edge of the shielding material and one or more pulling elements of the support system, and
a second motor (9) to drive the one or more pulling elements,
**characterized in that** at least one of the first motor (4) and second motor (9) can be driven with different speeds, and **in that** the shielding system comprises
a sensor to measure a process parameter during winding/unwinding of the shielding material, and
a control system (10) to control a ratio between speeds of the first and the second motor in dependence of the process parameter.

2. The shielding system of claim 1, wherein the process parameter is a rotational position of the roller (3) or the height of the roller.

3. The shielding system of claim 2, wherein the sensor is an encoder arranged to determine a rotational position of the roller (3) and/or the one or more winding elements.

4. The shielding system of claim 1, wherein the process parameter is a tension in the shielding material (2).

5. The shielding system of any of the preceding claims, wherein the one or more pulling elements are one or more winding elements (7) on which the flexible means can be wound.

6. The shielding system of any of the preceding claims, wherein the control system (10) is configured to control the ratio between rotational speeds of the first (4) and the second (9) motor in dependence of the process parameter.

7. The shielding system of any of the preceding claims, wherein the roller (3) and the first motor (4) are fixed at a stationary position at a bottom end of the shielding system.

8. The shielding system of any of the preceding claims, wherein the roller (3) is horizontally fixedly connected.

9. The shielding system of any of the preceding claims, wherein the control system (10) comprises a memory wherein a relationship between the process parameter and associated rotational speeds of the first (4) and second (9) motor or a ratio there between is stored, and wherein the control system is configured to adapt the ratio between rotational speeds on the basis of the relationship stored in the memory.

10. The shielding system of any of the preceding claims, wherein the upper edge support (5) comprises a shaft (8) carrying the one or more winding elements, and wherein the flexible means are lines (6) provided between the upper edge of the shielding material and the one or more winding elements, the second motor (9) being drivingly connected to the shaft (8).

11. The shielding system of any of the claims 1-6, wherein the upper edge support (5) system comprises one reel drivingly connected to the second motor (9), wherein the flexible means comprise lines between the upper edge and a main line, the main line being connected to the reel.

12. The shielding system of any of the preceding claims, wherein the flexible means (6) comprise spring elements.

13. The shielding system of any of the preceding claims, wherein the shielding system comprises an emergency stop sensor (21) configured to determine whether an object is or may be trapped between shielding material and the roller.

14. The shielding system of any of the preceding claims, wherein the shielding material comprises reinforcement ribs (26).

15. Method for winding/unwinding a shielding material, comprising:
providing a shielding system (1) comprising:
a flexible shielding material (2)
a roller (3) for winding up and down the shielding material,
a first motor (4) to rotationally drive the roller,
an upper edge support system (5) for supporting an upper edge of the shielding material comprising flexible means (6) connected between the upper edge of the shielding material and one or more pulling elements of the support system,
and
a second motor (9) to drive the one or more pulling elements,
winding the shielding material up or down the roller to, respectively, decrease or increase a shielding area,
**characterized by** at least one of the first motor (4) and second motor (4) being driveable with different speeds,
wherein the method comprises:
measuring with a sensor a process parameter during winding of the shielding material, and controlling with a control system (10) the ratio between speeds of the first and the second motor in dependence of the process parameter.

## Patentansprüche

1. Abschirmsystem (1), Folgendes umfassend:
ein flexibles Abschirmungsmaterial (2),
eine Walze (3) zum Aufziehen und Herablassen des Abschirmungsmaterials,
einen ersten Motor (4) zum Drehantrieb der Walze,
ein Oberkantenhalterungssystem (5) zum Haltern einer Oberkante des Abschirmungsmaterials, langgestreckte, flexible Einrichtungen (6) umfassend, die zwischen der Oberkante des Abschirmungsmaterials und einem oder mehreren Zugelement/en des Halterungssystems vorgesehen sind, und
einen zweiten Motor (9) zum Antrieb des einen Zugelements oder der mehreren Zugelemente,
**dadurch gekennzeichnet, dass** der erste Motor (4) und/oder der zweite Motor (9) mit unterschiedlichen Geschwindigkeiten betrieben werden können/kann, und dass das Abschirmsystem umfasst:
einen Sensor zum Messen eines Prozessparameters während des Aufziehens/Herablassens des Abschirmungsmaterials, und
ein Steuersystem (10) zum Steuern eines Verhältnisses zwischen Geschwindigkeiten des ersten und zweiten Motors in Abhängigkeit vom Prozessparameter.

2. Abschirmsystem nach Anspruch 1, wobei es sich bei dem Prozessparameter um eine Drehstellung der Walze (3) oder die Höhe der Walze handelt.

3. Abschirmsystem nach Anspruch 2, wobei es sich bei dem Sensor um einen Messgeber handelt, der dazu eingerichtet ist, eine Drehstellung der Walze (3) und/oder des einen Zugelements oder der mehreren Zugelemente zu bestimmen.

4. Abschirmsystem nach Anspruch 1, wobei es sich bei dem Prozessparameter um eine Spannung im Abschirmungsmaterial (2) handelt.

5. Abschirmsystem nach einem der vorhergehenden Ansprüche, wobei es sich bei dem einen oder den mehreren Zugelement/en um ein oder mehrere Aufwicklungselemente (7) handelt, auf welche die flexiblen Einrichtungen aufgewickelt werden können.

6. Abschirmsystem nach einem der vorhergehenden Ansprüche, wobei das Steuersystem (10) dazu ausgelegt ist, das Verhältnis zwischen den Drehzahlen des ersten (4) und des zweiten (9) Motors in Abhängigkeit vom Prozessparameter zu steuern.

7. Abschirmsystem nach einem der vorhergehenden Ansprüche, wobei die Walze (3) und der erste Motor (4) an einer ortsfesten Stelle am unteren Ende des Abschirmsystems fixiert sind.

8. Abschirmsystem nach einem der vorhergehenden Ansprüche, wobei die Walze (3) horizontal feststehend angeschlossen ist.

9. Abschirmsystem nach einem der vorhergehenden Ansprüche, wobei das Steuersystem (10) einen Speicher umfasst, in welchem ein Verhältnis zwischen dem Prozessparameter und damit zusammenhängenden Drehzahlen des ersten (4) und zweiten (9) Motors oder ein Verhältnis zwischen diesen gespeichert ist, und wobei das Steuersystem dazu ausgelegt ist, das Verhältnis zwischen den Drehzahlen auf Grundlage des im Speicher gespeicherten Verhältnisses anzupassen.

10. Abschirmsystem nach einem der vorhergehenden Ansprüche, wobei das Oberkantenhalterungssystem (5) eine das eine oder die mehreren Aufwicklungselement/e tragende Welle (8) umfasst, und wobei es sich bei den flexiblen Einrichtungen um Schnüre (6) handelt, die zwischen der Oberkante des Abschirmungsmaterials und dem einen oder den mehreren Aufwicklungselement/en vorgesehen sind, wobei der zweite Motor (9) in Antriebsverbindung an die Welle (8) angeschlossen ist.

11. Abschirmsystem nach einem der Ansprüche 1 bis 6, wobei das Oberkantenhalterungssystem (5) eine Rolle umfasst, die in Antriebsverbindung an den zweiten Motor (9) angeschlossen ist, wobei die flexiblen Einrichtungen Schnüre zwischen der Oberkante und eine Hauptschnur umfassen, wobei die Hauptschnur an die Rolle angeschlossen ist.

12. Abschirmsystem nach einem der vorhergehenden Ansprüche, wobei die flexiblen Einrichtungen (6) Federelemente umfassen.

13. Abschirmsystem nach einem der vorhergehenden Ansprüche, wobei das Abschirmsystem einen Nothaltsensor (21) umfasst, der dazu ausgelegt ist, zu bestimmen, ob sich ein Gegenstand zwischen dem Abschirmungsmaterial und der Walze verfangen hat oder eventuell verfangen wird.

14. Abschirmsystem nach einem der vorhergehenden Ansprüche, wobei das Abschirmungsmaterial Verstärkungsrippen (26) umfasst.

15. Verfahren zum Aufziehen/Herablassen eines Abschirmungsmaterials, Folgendes umfassend:
Bereitstellen eines Abschirmsystems (1), das umfasst:
ein flexibles Abschirmungsmaterial (2),
eine Walze (3) zum Aufziehen und Herablassen des Abschirmungsmaterials,
einen ersten Motor (4) zum Drehantrieb der Walze,
ein Oberkantenhalterungssystem (5) zum Haltern einer Oberkante des Abschirmungsmaterials, langgestreckte, flexible Einrichtungen (6) umfassend, die zwischen der Oberkante des Abschirmungsmaterials und einem oder mehreren Zugelement/en des Halterungssystems angeschlossen sind, und
einen zweiten Motor (9) zum Antrieb des einen Zugelements oder der mehreren Zugelemente,
Aufziehen des Abschirmungsmaterials auf die bzw. Herablassen des Abschirmungsmaterials von der Walze, um eine Abschirmfläche zu verkleinern bzw. zu vergrößern,
**dadurch gekennzeichnet, dass** der erste Motor (4) und/oder der zweite Motor (9) mit unterschiedlichen Geschwindigkeiten betrieben werden können/kann,
wobei das Verfahren umfasst:
während des Aufziehens/Herablassens des Abschirmungsmaterials einen Prozessparameter mit einem Sensor zu messen und das Verhältnis zwischen Geschwindigkeiten des ersten und zweiten Motors in Abhängigkeit vom Prozessparameter mit einem Steuersystem (10) zu steuern.

## Revendications

1. Système de protection (1), comprenant :
un matériau de protection flexible (2)
un rouleau (3) permettant d'enrouler et de dérouler le matériau de protection,
un premier moteur (4) pour entraîner le rouleau en rotation,
un système de support de bord supérieur (5) permettant de supporter un bord supérieur du matériau de protection comprenant des moyens flexibles allongés (6) disposés entre le bord supérieur du matériau de protection et un ou plusieurs éléments de traction du système de support, et
un second moteur (9) pour entraîner lesdits un ou plusieurs éléments de traction,
**caractérisé en ce qu'**au moins l'un desdits premier moteur (4) et second moteur (9) peut être entraîné avec différentes vitesses, et **en ce que** le système de protection comprend
un capteur pour mesurer un paramètre de procédé pendant l'enroulement/le déroulement du matériau de protection, et
un système de commande (10) permettant de commander un rapport entre les vitesses du premier et du second moteur en fonction du paramètre de procédé.

2. Système de protection selon la revendication 1, dans lequel le paramètre de procédé est une position de rotation de rouleau (3) ou la hauteur du rouleau.

3. Système de protection selon la revendication 2, dans lequel le capteur est un encodeur agencé pour déterminer une position de rotation du rouleau (3) et/ou desdits un ou plusieurs éléments d'enroulement.

4. Système de protection selon la revendication 1, dans lequel le paramètre de procédé est une tension dans le matériau de protection (2).

5. Système de protection selon l'une quelconque des revendications précédentes, dans lequel lesdits un ou plusieurs éléments de traction sont un ou plusieurs éléments d'enroulement (7) sur lesquels les moyens flexibles peuvent être enroulés.

6. Système de protection selon l'une quelconque des revendications précédentes, dans lequel le système de commande (10) est configuré pour commander le rapport entre les vitesses de rotation du premier (4) et du second (9) moteur en fonction du paramètre de procédé.

7. Système de protection selon l'une quelconque des revendications précédentes, dans lequel le rouleau (3) et le premier moteur (4) sont fixés en une position stationnaire au niveau d'une extrémité inférieure du système de protection.

8. Système de protection selon l'une quelconque des revendications précédentes, dans lequel le rouleau (3) est raccordé horizontalement de manière fixe.

9. Système de protection selon l'une quelconque des revendications précédentes, dans lequel le système de commande (10) comprend une mémoire dans laquelle une relation entre le paramètre de procédé et des vitesses de rotation associées du premier (4) et du second (9) moteur ou un rapport entre celles-ci est stocké, et dans lequel le système de commande est configuré pour adapter le rapport entre les vitesses de rotation sur la base de la relation stockée dans la mémoire.

10. Système de protection selon l'une quelconque des revendications précédentes, dans lequel le support de bord supérieur (5) comprend un arbre (8) portant lesdits un ou plusieurs éléments d'enroulement, et dans lequel les moyens flexibles sont des conduites (6) disposées entre le bord supérieur du matériau de protection et lesdits un ou plusieurs éléments d'enroulement, le second moteur (9) étant raccordé en entraînement à l'arbre (8).

11. Système de protection selon l'une quelconque des revendications 1 à 6, dans lequel le système de support de bord supérieur (5) comprend un dévidoir raccordé en entraînement au second moteur (9), dans lequel les moyens flexibles comprennent des conduites entre le bord supérieur et une conduite principale, la conduite principale étant raccordée au dévidoir.

12. Système de protection selon l'une quelconque des revendications précédentes, dans lequel les moyens flexibles (6) comprennent des éléments formant ressort.

13. Système de protection selon l'une quelconque des revendications précédentes, dans lequel le système de protection comprend un capteur d'arrêt d'urgence (21) configuré pour déterminer si un objet est ou peut être piégé entre le matériau de protection et le rouleau.

14. Système de protection selon l'une quelconque des revendications précédentes, dans lequel le matériau de protection comprend des nervures de renforcement (26).

15. Procédé d'enroulement/de déroulement d'un matériau de protection, comprenant les étapes consistant à :
fournir un système de protection (1) comprenant :
un matériau de protection flexible (2)
un rouleau (3) permettant d'enrouler et de dérouler le matériau de protection,
un premier moteur (4) pour entraîner le rouleau en rotation,
un système de support de bord supérieur (5) permettant de supporter un bord supérieur du matériau de protection comprenant des moyens flexibles (6) reliés entre le bord supérieur du matériau de protection et un ou plusieurs éléments de traction du système de support, et
un second moteur (9) pour entraîner lesdits un ou plusieurs éléments de traction,
enrouler ou dérouler le matériau de protection sur le rouleau pour, respectivement, diminuer ou augmenter une aire de protection,
**caractérisé en ce qu'**au moins l'un desdits premier moteur (4) et second moteur (9) peut être entraîné avec différentes vitesses,
dans lequel le procédé comprend l'étape consistant à :
mesurer avec un capteur un paramètre de procédé pendant l'enroulement ou le déroulement du matériau de protection, et commander avec un système de commande (10) le rapport entre les vitesses du premier et du second moteur en fonction du paramètre de procédé.
